# EUROPÄISCHE PATENTSCHRIFT

(11) **EP 3 350 009 B1**
(45) Veröffentlichungstag und Bekanntmachung des Hinweises auf die Patenterteilung: **24.07.2019**
(21) Anmeldenummer: 16777546.9
(22) Anmeldetag: 15.09.2016
(51) Int. Cl.: B60K 15/035, B60K 15/03

(54) **KRAFTFAHRZEUGTANKSYSTEM**
MOTOR VEHICLE TANK SYSTEM
SYSTÈME DE RÉSERVOIR POUR VÉHICULE À MOTEUR

(30) Priorität: 15.09.2015 DE 102015217611
(43) Veröffentlichungstag der Anmeldung: 25.07.2018
(73) Patentinhaber: Kautex Textron GmbH & Co. KG, 53229 Bonn (DE)
(72) Erfinder: WOLF, Hartmut, 53639 Königswinter (DE); EULITZ, Dirk, 53115 Bonn (DE); OSSEGE, Theodor, 53619 Rheinbreitbach (DE); GEBERT, Klaus, 47877 Willich (DE)
(74) Vertreter: Richly & Ritschel Patentanwälte PartG mbB
(86) Internationale Anmeldenummer: PCT/EP2016/071816
(87) Internationale Veröffentlichungsnummer: WO 2017/046242

(56) Entgegenhaltungen:
- EP-A1- 2 623 354
- DE-A1-102012 200 177
- DE-A1-102014 217 463
- DE-C1- 19 956 582

## Beschreibung

Die vorliegende Erfindung betrifft ein Kraftfahrzeugtanksystem mit einem Kraftfahrzeugtank und einer Entlüftungsvorrichtung zum Entlüften eines Tankvolumens des Kraftfahrzeugtanks.

Bei Kraftfahrzeugtanks steigt im Laufe des Betriebs der Tankinnendruck aufgrund von Verdampfung flüchtiger Bestandteile des Kraftstoffs stetig an. Der Druckanstieg würde solange andauern, bis der Tankinnendruck dem Partialdruck des Kraftstoffs entspricht und sich ein Druckgleichgewicht einstellt. Dabei ist bei hohen Umgebungstemperaturen der Partialdruck und der sich somit einstellende Tankinnendruck größer als bei niedrigen Umgebungstemperaturen. Diese Druckbeaufschlagung führt zu einer Deformation des Kraftfahrzeugtanks.

Bei herkömmlichen Kraftfahrzeugtanksystemen wird der Druck im Kraftfahrzeugtank dadurch gesenkt, dass das mit Kohlenwasserstoffen gesättigte Gas über ein Aktivkohlefilter an die Atmosphäre abgegeben wird, wobei die Kohlenwasserstoffe durch die Aktivkohle adsorbiert werden. Die Aufnahmekapazität eines Aktivkohlefilters ist begrenzt, so dass das Aktivkohlefilter während des Betriebs der Brennungskraftmaschine des Fahrzeugs mit Ansaugluft gespült wird, wodurch die Größe des Aktivkohlefilters begrenzt und ferner der Energiegehalt der Kohlenwasserstoffe durch die Brennkraftmaschine teilweise genutzt werden kann.

Durch das stetige Ableiten von Überdruck über das Aktivkohlefilter verarmt der Kraftstoff an dessen leicht flüchtigen Bestandteilen, wodurch sich insbesondere die Starteigenschaften, insbesondere die Kaltstarteigenschaften des so gealterten Kraftstoffs verschlechtern.

Insbesondere bei Plug-In-Hybridfahrzeugen, die im Folgenden als PHEV (aus dem englischen für plug in hybrid vehicle) abgekürzt werden, würde dieser Mechanismus zu einer Verarmung des Kraftstoffs führen. PHEV weisen eine hohe rein elektrisch zurücklegbare Reichweite auf. In Städten werden zunehmend sogenannte Umweltzonen eingerichtet, in denen ein Betrieb eins Kfz mit Verbrennungsmotor verboten ist. Daher werden große Strecken mit rein elektrischem Antrieb zurückgelegt, ohne dass der Verbrennungsmotor aktiviert und das Aktivkohlefilter gespült wird. Eine Traktionsbatterie des PHEV wird bei Bedarf wieder geladen, entweder über eine Ladestation oder über Rekurpation, so dass weiterhin rein elektrisch gefahren werden kann. Dies führt dazu, dass mitgeführter und nicht verbrauchter/verbrannter Kraftstoff im Kfz-Tank oft über Wochen und Monate altert. Um dieser Kraftstoffalterung entgegenzuwirken, werden Kraftfahrzeugtanks für PHEV strukturell verstärkt, so dass Kraftfahrzeugtanks für PHEV einen höheren Innendruck standhalten können, wodurch weniger flüchtige Bestandteile aus dem Kraftstoff ausdampfen, da zum Verdampfen ein höherer Partialdruck notwendig wäre.

Ein weiterer Vorteil der strukturellen Verstärkung des Kraftfahrzeugtanks liegt darin, dass aufgrund der selteneren Spülvorgänge mit Ansauglauft der Brennkraftmaschine das Aktivkohlefilter mit weniger Kohlenwasserstoffen beaufschlagt wird, wodurch das Aktivkohlefilter hinsichtlich seiner Größe und Abmessungen kleiner dimensioniert werden kann. Der Verkleinerung des Aktivkohlefilters sind jedoch Grenzen gesetzt, da vor einer Betankung des Kfz-Tanks dieser entlüftet und dessen Innendruck abgebaut werden muss. Die Entlüftung sollte über das Aktivkohlefilter erfolgen, damit die Kfz-Umgebung bei einer Betankung mit möglichst wenigen Kohlenwasserstoffen belastet wird. Ein weiterer unerwünschter Effekt des notwendigen Druckabbaus vor einer Betankung sind Wartezeiten vor einer Betankung.

Die DE 10 2012 200 177 A1 beschreibt eine Aufbereitungsvorrichtung für verdunsteten Brennstoff für ein Fahrzeug. Die Aufbereitungsvorrichtung umfasst dabei eine Dampf-Flüssigkeits-Abscheidungseinrichtung, die in einem Tankdeckel integriert ist. Die Dampf-Flüssigkeits-Abscheidungseinrichtung ist über einen direkten Spülkanal und einem Spülsteuerventil mit einem Luftansaugsystem einer Brennkraftmaschine fluidverbunden.

Die DE 10 2014 217 463 A1, in der die Merkmale des Oberbegriffs von Anspruch 1 enthalten sind, beschreibt Systeme und Verfahren für ein nicht integriertes Nur-Kanister-Betankungssystem mit zwei Ventilen. Dieses System weist ein Grade-Vent-Entlüftungsventil, ein Fill-Limit-Entlüftungsventil und ein Grade-Vent-Ventil auf, die jeweils mit einem Innenraum eines Tanks fluidverbunden sind. Das Grade-Vent-Entlüftungsventil, das Fill-Limit-Entlüftungsventil und das Grade-Vent-Ventil sind mit einem Tankdrucksteuerungsventil fluidverbunden, das wiederum mit einem Ansaugtrakt einer Brennkraftmaschine fluidverbunden ist.

Die DE 199 56 582 C1 beschreibt eine Entlüftungsanlage für den Kraftstoffbehälter eines Kraftfahrzeuges. Die Entlüftungsanlage weist ein Betankungsentlüftungsventil auf, dass über eine Betankungsentlüftungsleitung mit einem 3/2-Wegeventil fluidverbunden ist. Ferner weist die Entlüftungsanlage ein Betriebsentlüftungsventil auf, dass über eine Betriebsentlüftungsleitung mit dem 3/2-Wegeventil fluidverbunden ist. Das Betankungsentlüftungsventil, die Betankungsentlüftungsleitung, das Betriebsentlüftungsventil, die Betriebsentlüftungsleitung und das 312-Wegeventil sind jeweils innerhalb des Tanks angeordnet. Das 3/2-Wegeventil ist über eine durch die Behälterwand des Tanks hindurch geführte Entlüftungsleitung mit einem Aktivkohlefilter fluidverbunden.

Die der vorliegenden Erfindung zugrundeliegende Aufgabe ist die Bereitstellung eines verbesserten Kraftfahrzeugtanksystems, das einen verkleinerten Aktivkohlefilter mit verringertem Spülbedarf, eine Reduzierung bzw. Vermeidung von Wartezeiten vor einem Betankungsvorgang und eine verbesserte Nutzung des Energiegehalts von Kraftstoffdämpfen ermöglicht.

Die der vorliegenden Erfindung zugrundeliegende Aufgabe wird durch ein Kraftfahrzeugtanksystem mit den Merkmalen des Anspruchs 1 gelöst. Vorteilhafte Ausgestaltungen sind in dessen abhängigen Ansprüchen beschrieben.

Im genaueren wird die der vorliegenden Erfindung zugrundeliegende Aufgabe durch ein Kraftfahrzeugtanksystem mit einem Kraftfahrzeugtank und einer Entlüftungsvorrichtung zum Entlüften eines Tankvolumens des Kraftfahrzeugtanks gelöst, wobei der Kraftfahrzeugtank über die Entlüftungsvorrichtung, eine mit der Entlüftungsvorrichtung fluidverbundene Entlüftungsleitung und einen mit der Entlüftungsleitung fluidverbundenen Regelventil direkt und unmittelbar mit einem Ansaugtrakt einer Brennkraftmaschine fluidverbindbar ist.

Im genaueren wird die der vorliegenden Erfindung zugrundeliegende Aufgabe durch ein Kraftfahrzeugtanksystem mit einem Kraftfahrzeugtank und einer Entlüftungsvorrichtung zum Entlüften eines Tankvolumens des Kraftfahrzeugtanks gelöst, wobei der Kraftfahrzeugtank über die Entlüftungsvorrichtung, eine mit der Entlüftungsvorrichtung fluidverbundene Entlüftungsleitung und einen mit der Entlüftungsleitung fluidverbundenen Regelventil direkt und unmittelbar mit einem Ansaugtrakt einer Brennkraftmaschine fluidverbindbar ist.

Das erfindungsgemäße Kraftfahrzeugtanksystem bietet den Vorteil, dass zur Entlüftung des Kraftfahrzeugtanks ein Aktivkohlefilter nicht notwendigerweise beladen werden muss. Denn aufgrund der direkten und unmittelbaren Verbindung des Kraftfahrzeugtanks über die Entlüftungsvorrichtung, die Entlüftungsleitung und das Regelventil mit dem Ansaugtrakt der Brennkraftmaschine des Kfz kann unter Druck stehendes Gas aus dem Kraftfahrzeugtank direkt in den Ansaugtrakt der Brennkraftmaschine abgelassen werden. Weiterhin bietet das erfindungsgemäße Kraftfahrzeugtanksystem den Vorteil, dass der Energiegehalt des üblicherweise mit Kohlenwasserstoffen gesättigten und unter Druck stehenden Gases aus dem Kraftfahrzeugtank der Brennkraftmaschine direkt zur Verfügung gestellt werden kann. Der Druckabbau direkt über den Ansaugtrakt der Brennkraftmaschine ist schneller als ein Druckabbau über ein Aktivkohlefilter, so dass Wartezeiten vor einem Betankungsvorgang vermieden oder zumindest reduziert werden können.

Die direkte und unmittelbare Verbindung des Kraftfahrzeugtanks mit dem Ansaugtrakt der Brennkraftmaschine ist so zu verstehen, dass in diesem Entlüftungspfad kein Aktivkohlefilter angeordnet ist. Der Ansaugtrakt der Brennkraftmaschine umfasst alle Verbrennungsluft führenden Bauteile der Brennkraftmaschine, die sich vor dem Brennraum der Brennkraftmaschine befinden. Dazu gehört auch ein Lufteinlass, der in einem Brennraum der Brennkraftmaschine mündet. Die Entlüftungsvorrichtung umfasst ein Betriebsentlüftungsventil und ein Betankungsentlüftungsventil Ferner umfasst die Entlüftungsvorrichtung ein 3/2-Wegeventil in Zusammenhang mit einem Betriebsentlüftungsventil und einem Betankungsentlüftungsventil umfassen. Die Fluidverbindung zwischen der Entlüftungsvorrichtung und dem Ansaugtrakt der Brennkraftmaschine erfolgt über eine Spülleitung, wobei das Regelventil flussabwärts von der Spülleitung angeordnet ist. Das erfindungsgemäße Kraftfahrzeugtanksystem bietet folglich eine Überbrückung eines eventuell vorhandenen Aktivkohlefilters.

Das Kraftfahrzeugtanksystem ist derart ausgebildet, dass die Entlüftungsvorrichtung ein Betriebsentlüftungsventil zum Entlüften des Tankvolumens während eines Betriebs eines das Kraftfahrzeugtanksystem umfassenden Kraftfahrzeugs umfasst, wobei das Betriebsentlüftungsventil mit dem Kraftfahrzeugtank und mittels einer Betriebsentlüftungsleitung mit der Entlüftungsleitung fluidverbunden ist.

Folglich ist das Betriebsentlüftungsventil über die Entlüftungsleitung und das Regelventil direkt und unmittelbar mit dem Ansaugtrakt der Brennkraftmaschine fluidverbunden.

Weiter ist das Kraftfahrzeugtanksystem derart ausgebildet, dass die Entlüftungsvorrichtung ein Betankungsentlüftungsventil zum Entlüften des Tankvolumens während eines Betankungsvorgangs des Kraftfahrzeugtanks umfasst, wobei das Betankungsentlüftungsventil mit dem Kraftfahrzeugtank und mittels einer Betankungsentlüftungsleitung mit der Entlüftungsleitung fluidverbunden ist.

Folglich ist das Betankungsentlüftungsventil über die Entlüftungsleitung und das Regelventil direkt und unmittelbar mit dem Ansaugtrakt der Brennkraftmaschine fluidverbunden.

Das Kraftfahrzeugtanksystem ist derart ausgebildet, dass dieses ein 3/2-Wegeventil umfasst, das mit dem Betriebsentlüftungsventil, dem Betankungsentlüftungsventil und der Entlüftungsleitung fluidverbunden ist. Das 3/2-Wegeventil ist dabei elektrisch und/oder elektromagnetisch zwischen einer Betriebsentlüftungsstellung und einer Betankungsentlüftungsstellung verstellbar, wobei in der Betriebsentlüftungsstellung das Betriebsentlüftungsventil mittels des 3/2-Wegeventils mit der Entlüftungsleitung fluidverbunden ist, und wobei in der Betankungsentlüftungsstellung das Betankungsentlüftungsventil mittels des 3/2-Wegeventils mit der Entlüftungsleitung fluidverbunden ist.

Ein entsprechend ausgebildetes Kraftfahrzeugtanksystem bietet den Vorteil, dass sowohl das Betriebsentlüftungsventil als auch das Betankungsentlüftungsventil nicht notwendigerweise elektrisch und/oder elektromagnetisch verstellbar sein müssen, sondern lediglich das 3/2-Wegeventil muss eine elektrische und/oder elektromagnetisch Verstellbarkeit aufweisen. Dies reduziert die Komplexität des Kraftfahrzeugtanks Systems.

Unter einem 3/2-Wegeventil ist ein Schaltventil zu verstehen, dass drei Anschlüsse und zwei Schaltstellungen aufweist. Bei dem vorliegenden Kraftfahrzeugtanksystem wird ein erster Anschluss des 3/2 Wegeventils mit einer Betriebsentlüftungsleitung, ein zweiter Anschluss mit einer Betankungsentlüftungsleitung und ein dritter Anschluss mit einer Entlüftungsleitung verbunden. In einer ersten Schaltstellung des 3/2-Wegeventils ist die Betriebsentlüftungsleitung mit der Entlüftungsleitung fluidverbunden, und in einer zweiten Schaltstellung des 3/2-Wegeventils ist die Betankungsentlüftungsleitung mit der Entlüftungsleitung fluidverbunden.

Vorzugsweise ist das Kraftfahrzeugtanksystem derart ausgebildet, dass das Betriebsentlüftungsventil elektrisch und/oder elektromagnetisch zwischen einer Offenstellung und einer Schließstellung verstellbar ist, wobei in der Offenstellung des Betriebsentlüftungsventils der Kraftfahrzeugtank mit der Betriebsentlüftungsleitung fluidverbunden ist, und wobei in der Schließstellung des Betriebsentlüftungsventils der Kraftfahrzeugtank von der Betriebsentlüftungsleitung fluidgetrennt ist.

Weiter vorzugsweise ist das Kraftfahrzeugtanksystem derart ausgebildet, dass das Betankungsentlüftungsventil elektrisch und/oder elektromagnetisch zwischen einer Offenstellung und einer Schließstellung verstellbar ist, wobei in der Offenstellung des Betankungsentlüftungsventils der Kraftfahrzeugtank mit der Betankungsentlüftungsleitung fluidverbunden ist, und wobei in der Schließstellung des Betankungsentlüftungsventils der Kraftfahrzeugtank von der Betankungsentlüftungsleitung fluidgetrennt ist.

Wenn sowohl das Betriebsentlüftungsventil als auch das Betankungsentlüftungsventil elektrisch und/oder elektromagnetisch verstellbar sind, dann ist zum Schalten zwischen einer Betriebsentlüftung und einer Betankungsentlüftungsleitung 3/2-Wegeventil nicht unbedingt notwendig.

Vorzugsweise ist das Kraftfahrzeugtanksystem derart ausgebildet, dass das Regelventil elektrisch und/oder elektromagnetisch zwischen einer Offenstellung und einer Schließstellung verstellbar ist, wobei in der Offenstellung des Regelventil ist die Entlüftungsleitung mittels des Regelventil es mit dem Ansaugtrakt der Brennkraftmaschine fluidverbunden ist, und wobei in der Schließstellung des Regelventil die Entlüftungsleitung mittels des Regelventil von dem Ansaugtrakt der Brennkraftmaschine fluidgetrennt ist.

Das Regelventil kann auch Zwischenstellungen zwischen der Offenstellung und der Schließstellung einnehmen, so dass das druckbeaufschlagte Gas aus dem Kraftstofftank geregelt, d.h. mit einem verminderten Druck in den Ansaugtrakt der Brennkraftmaschine abgelassen werden kann.

Weiter vorzugsweise ist das Kraftfahrzeugtanksystem derart ausgebildet, dass dieses eine Tanksteuereinrichtung umfasst, die mit der Entlüftungsvorrichtung über eine Datenaustauschverbindung verbunden ist.

Die Datenaustauschverbindung kann entweder kabelbasiert und/oder kabellos, d.h. funkbasiert ausgebildet sein. Das entsprechend ausgebildete Kraftfahrzeugtanksystem bietet den Vorteil, dass die Stellungen des Betriebsentlüftungsventils und/oder des Betankungsentlüftungsventils und/oder des 3/2-Wegeventils von der Tanksteuereinrichtung gesteuert werden können. Die Tanksteuereinrichtung wiederum kann beispielsweise mit einer weiteren Elektronikeinheit, beispielsweise mit einem Bordcomputer des Kfz oder mit einem mobilen Endgerät (zum Beispiel ein Smartphone) zum Austausch von Daten gekoppelt sein, so dass situationsabhängig seitens der Elektronikeinheit an die Tanksteuereinrichtung ein Signal zum Tanken abgegeben wird, gemäß dem innerhalb einer vorbestimmten Zeitperiode (z.B. 3 Minuten) ein Tankvorgang gestartet werden soll, so dass dann entsprechend ein Druckabbau des Kraftfahrzeugtanks über einen Ablass des Gases direkt in den Ansaugtrakt der Brennkraftmaschine initiiert werden kann.

Vorzugsweise ist das Kraftfahrzeugtanksystem derart ausgebildet, dass die Tanksteuereinrichtung über die Datenaustauschverbindung mit dem Betriebsentlüftungsventil verbunden ist, wobei die Tanksteuereinrichtung dazu ausgebildet ist, an das Betriebsentlüftungsventil ein Entlüftungssignal zu übertragen, wobei bei Empfang des Entlüftungssignals das Betriebsentlüftungsventil in dessen Offenstellung überführt wird. Ferner ist die Tanksteuereinrichtung dazu ausgebildet, an das Betriebsentlüftungsventil ein Entlüftungsstoppsignal zu übertragen, wobei bei Empfang des Entlüftungsstoppsignals das Betriebsentlüftungsventil in dessen Schließstellung überführt wird.

Weiter vorzugsweise ist das Kraftfahrzeugtanksystem derart ausgebildet, dass die Tanksteuereinrichtung über die Datenaustauschverbindung mit dem Betankungsentlüftungsventil verbunden ist, wobei die Tanksteuereinrichtung dazu ausgebildet ist, an das Betankungsentlüftungsventil ein Entlüftungssignal zu übertragen, wobei bei Empfang des Entlüftungssignals das Betankungsentlüftungsventil in dessen Offenstellung überführt wird. Ferner ist Tanksteuereinrichtung dazu ausgebildet, an das Betankungsentlüftungsventil ein Entlüftungsstoppsignal zu übertragen, wobei bei Empfang des Entlüftungsstoppsignals das Betankungsentlüftungsventil in dessen Schließstellung überführt wird.

Das Kraftfahrzeugtanksystem ist vorzugsweise derart ausgebildet, dass dieses ferner einen Drucksensor zum Bestimmen eines Innendrucks des Kraftfahrzeugtanks umfasst. Der Drucksensor ist dabei mit der Tanksteuereinrichtung über eine zweite Datenaustauschverbindung verbunden und dazu ausgebildet, den Innendruck des Kraftfahrzeugtanks repräsentierende Daten an die Tanksteuereinrichtung zu übertragen. Die Tanksteuereinrichtung wiederum ist dazu ausgebildet, ein Entlüftungssignal an das 3/2-Wegeventil und/oder das Betriebsentlüftungsventil und/oder das Betankungsentlüftungsventil und/oder das Regelventil zu übertragen, so dass eine Fluidverbindung zwischen dem Kraftfahrzeugtank und dem Ansaugtrakt der Brennkraftmaschine etablierte wird, wenn der Innendruck im Kraftfahrzeugtank einen vorbestimmten Druck übersteigt.

Das entsprechend ausgebildete Kraftfahrzeugtanksystem bietet den Vorteil, dass lediglich bei Übersteigen eines vorbestimmten Innendrucks im Kraftfahrzeugtank eine Entlüftung des Kraftfahrzeugtanks vor einem Befüllvorgang initiiert wird. Folglich wird ein Verdampfen des Kraftstoffs im Kraftfahrzeugtank reduziert, wodurch eine Alterung des sich im Kraftstofftank befindlichen Kraftstoffs entgegengewirkt wird.

Weiter vorzugsweise ist das Kraftfahrzeugtanksystem derart ausgebildet, dass die Tanksteuereinrichtung eine Datenschnittstelle zum Austausch von Daten mit einer Elektronikeinheit umfasst, wobei eine Ausgabe des Entlüftungssignals und/oder des Entlüftungsstoppsignals durch Empfang von Daten initiierbar ist, die von der Elektronikeinheit übertragen werden.

Die Elektronikeinheit kann beispielsweise ein Bordcomputer des Kfz und/oder ein mobiles Endgerät sein. In der Elektronikeinheit kann ein Signal erzeugt werden, durch das die Tanksteuereinrichtung ein Entlüftungssignal ausgibt. Durch den Bordcomputer bzw. das mobile Endgerät können Navigationsdaten, die den Füllstand des Kraftstofftanks repräsentierende Daten, die den Ladezustand einer Batterie (bei einem Hybrid-Kfz oder einem PHEV) repräsentieren Daten und weitere Daten miteinander verarbeitet werden, um festzustellen, ob eine Betankung mit Kraftstoff notwendig ist. Wenn eine entsprechende Betankung notwendig ist, wird ein entsprechendes Signal an die Tanksteuereinrichtung ausgegeben, so dass rechtzeitig vor Eintreffen des Kraftfahrzeugs an einer Tankstelle der Druckabbau über direkte Ableitung in den Ansaugtrakt der Brennkraftmaschine initiiert werden kann. Weiterhin können Navigationsdaten eines Navigationssystems derart genutzt werden, dass beispielsweise Umweltzonen berücksichtigt werden, in denen eine Aktivierung der Brennkraftmaschine untersagt ist. Die Steuerung des Druckabbaus wird dann unter Berücksichtigung der entsprechenden Daten durchgeführt. Die Datenschnittstelle zwischen der Elektronikeinheit und der Tanksteuereinrichtung kann Kabel gebunden und/oder kabellos sein.

Das Kraftfahrzeugtanksystem ist vorzugsweise derart ausgebildet, dass die Tanksteuereinrichtung lediglich dann ein Entlüftungssignal an das 3/2-Wegeventil und/oder an das Betriebsentlüftungsventil und/oder an das Betankungsentlüftungsventil überträgt, wenn die Tanksteuereinrichtung von der Elektronikeinheit ein Tanksignal empfängt.

Das Tanksignal, das von der Elektronikeinheit an die Tanksteuereinrichtung übertragen wird, zeigt einen Tankwunsch oder ein Tankbedürfnis an. Das Tanksignal kann beispielsweise von dem Bordcomputer des Kfz oder von einem mobilen Endgerät ausgegeben werden. Zur Erzeugung des Tanksignals werden vorzugsweise Navigationsdaten eines Navigationssystems bzw. eines Navigationsprogramms herangezogen. Basierend auf diesen Navigationsdaten kann bestimmt werden, ob eine Betankung zum Erreichen eines vorbestimmten Ziels notwendig ist. Das Ausgeben des Tanksignals kann unter Berücksichtigung von GPS-Informationen von umliegenden Tankstellen erfolgen. Wenn sich beispielsweise eine Tankstelle in einem vorbestimmten Abstand zur aktuellen Position des Kfz befindet, kann das Tanksignal ausgegeben werden. Das Tanksignal wird dabei rechtzeitig vor Ankunft des Kfz an der Tankstelle ausgegeben, so dass gewährleistet wird, dass genügend Zeit zur Entlüftung des Kraftfahrzeugtanks direkt über den Ansaugtrakt der Brennkraftmaschine verbleibt.

Vorzugsweise umfasst das Kraftfahrzeugtanksystem ein mit der Entlüftungsleitung fluidverbundenes Absperrventil und einen mit dem Absperrventil fluidverbundenen Aktivkohlefilter zum Filtern von aus dem Kraftfahrzeugtank abzuleitenden Gasen. Dabei ist der Kraftfahrzeugtank über das Betriebsentlüftungsventil und/oder das Betankungsentlüftungsventil und/oder das 3/2-Wegeventil und das Absperrventil mit dem Aktivkohlefilter fluidverbindbar. Ferner ist das Aktivkohlefilter über ein Auslassventil mit dem Ansaugtrakt der Brennkraftmaschine fluidverbindbar. Die Tanksteuereinrichtung ist dazu ausgebildet, ein Öffnungssignal und/oder ein Schließsignal an das Absperrventil zu übertragen, wobei bei Empfang des Öffnungssignals das Absperrventil öffnet, so dass der Kraftfahrzeugtank mit dem Aktivkohlefilter fluidverbunden ist, und wobei bei Empfang des Schließsignals das Absperrventil schließt, so dass der Kraftfahrzeugtank von dem Aktivkohlefilter fluidgetrennt ist.

Das entsprechend ausgebildete Kraftfahrzeugtanksystem bietet den Vorteil, dass zum einen eine Druckentlastung des Kraftfahrzeugtanks direkt und ohne Durchströmung des Aktivkohlefilters ermöglicht ist, ferner aber auch eine Druckentlastung des Kraftfahrzeugtanks durch entsprechende Schaltung der Ventile über das Aktivkohlefilter ermöglicht ist. Somit kann der Kraftfahrzeugtank beispielsweise auch ohne Aktivierung der Verbrennungskraftmaschine entlüftet werden.

Vorzugsweise ist das Kraftfahrzeugtanksystem derart ausgebildet, dass die Tanksteuerungseinrichtung dazu ausgebildet ist, zu einem ersten Zeitpunkt ein Entlüftungssignal an das 3/2-Wegeventil und/oder das Betriebsentlüftungsventil und/oder das Betankungsentlüftungsventil und/oder das Regelventil zu übertragen, so dass eine Fluidverbindung zwischen dem Kraftfahrzeugtank und dem Ansaugtrakt der Brennkraftmaschine etabliert ist. Ferner ist die Tanksteuereinrichtung dazu ausgebildet, zu einem zweiten Zeitpunkt, der den ersten Zeitpunkt zeitlich nachfolgend ist, ein Öffnungssignal an das Absperrventil zu übertragen, so dass eine Fluidverbindung zwischen dem Aktivkohlefilter und dem Ansaugtrakt der Brennkraftmaschine etabliert ist. Dabei wird vorzugsweise bei dem zweiten Zeitpunkt ein Schließsignal an das 3/2-Wegeventil und/oder das Betriebsentlüftungsventil und/oder das Betankungsentlüftungsventil und/oder das Regelventil übertragen.

Ein entsprechend ausgebildetes Kraftfahrzeugtanksystem bietet den Vorteil, dass zum Einen bei einem Entlüftungsvorgang des Kraftfahrzeugtanks das Aktivkohlefilter nicht unnötigerweise mit Kohlenwasserstoffen beladen wird, und zum Anderen vor einem Betankungsvorgang das Aktivkohlefilter durch Ansaugluft der Brennkraftmaschine gespült werden kann, so dass für einen nachfolgenden Betankungsvorgang genügend Beladungskapazität des Aktivkohlefilter verbleibt, so dass während des Betankungsvorgangs entstehende Kohlenwasserstoffe durch das Aktivkohlefilter adsorbiert werden können.

Wenn beispielsweise an die Tanksteuereinrichtung ein Tanksignal gesendet wird (beispielsweise vom Bordcomputer und/oder von einem Navigationssystem), wird vor einer Betankung des Kraftfahrzeugtanks das unter Druck stehende Gas aus dem Kraftfahrzeugtank direkt zum Ansaugtrakt der Brennkraftmaschine geleitet. Sobald der Kraftstofftank drucklos ist und zu der Tankstelle weiterhin ein Weg zurückzulegen ist, wird die Fluidverbindung, die nicht über das Aktivkohlefilter führt, hin zum Ansaugtrakt geschlossen, woraufhin das Aktivkohlefilter durch Ansaugluft der Brennkraftmaschine gespült werden kann.

Unter einer elektrischen und/oder elektromagnetischen Verstellbarkeit eines Aktuators, beispielsweise des 3/2-Wegeventils oder des Betriebsentlüftungsventils oder des Betankungsentlüftungsventils oder des Regelventils oder des Absperrventils oder des Auslassventils, ist eine elektromechanische Verstellung des Aktuators zu verstehen.

Die Tanksteuerungseinrichtung kann als separate elektronische Einrichtung ausgebildet sein. Jedoch kann die Tanksteuerungseinrichtung auch als Teil eines Bordcomputersystems des Kraftfahrzeugs ausgebildet sein und eine Untereinheit des Bordcomputersystems darstellen.

Weitere Vorteile, Einzelheiten und Merkmale der Erfindung ergeben sich nachfolgend aus den erläuterten Ausführungsbeispielen. Dabei zeigen im Einzelnen:
- Figur 1:: eine schematische Darstellung eines nicht erfindungsgemäßen Kraftfahrzeugtanksystems; und
- Figur 2:: eine schematische Darstellung einer Abwandlung des in Figur 1 dargestellten Kraftfahrzeugtanksystems.

In der nun folgenden Beschreibung bezeichnen gleiche Bezugszeichen gleiche Bauteile beziehungsweise gleiche Merkmale, so dass eine in Bezug auf eine Figur durchgeführte Beschreibung bezüglich eines Bauteils auch für die anderen Figuren gilt, so dass eine wiederholende Beschreibung vermieden wird.

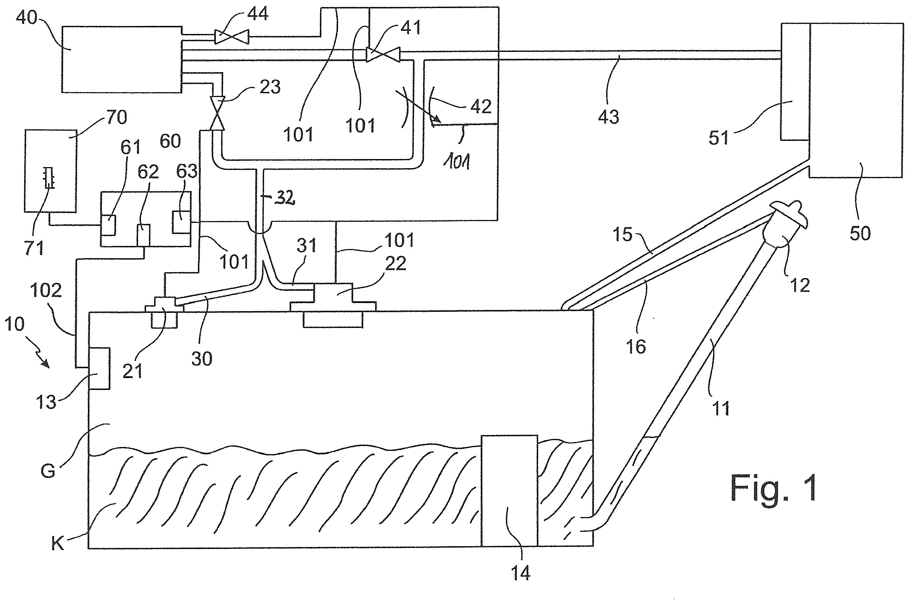

Figur 1 zeigt eine schematische Darstellung eines nicht erfindungsgemäßen Kraftfahrzeugtanksystems. Ein Kraftfahrzeugtank 10 beherbergt eine gewisse Menge von Kraftstoff K und darüber hinaus ein Gasvolumen G, das üblicherweise mit Kohlenwasserstoffen gesättigt ist. Zum Einfüllen von Kraftstoff K weist der Kraftfahrzeugtank 10 ein Einfüllrohr 11 auf, an dessen vom Kraftstofftank 10 abgewandten Ende ein Einfüllstutzen 12 angeordnet ist, der zur Aufnahme eines Zapfventils einer Befüllvorrichtung ausgelegt ist. Weiterhin beherbergt der Kraftfahrzeugtank 10 eine Kraftstofffördereinrichtung 14, die im dargestellten Ausführungsbeispiel auch als Kraftstoffpumpe 14 bezeichnet werden kann. Die Kraftstoffpumpe 14 ist über eine Kraftstoffleitung 15 mit einem Motor 50 eines in der Figur nicht dargestellten Kraftfahrzeugs zum Fördern des Kraftstoff K hin zum Motor 50 fluidverbunden. Ferner kann der Kraftfahrzeugtank 10 eine Rezirkulationsleitung 16 umfassen, die mit dem Kraftfahrzeugtank 10 und einem vom Einfüllstutzen 12 umschlossenen Volumen fluidverbunden ist. Die Rezirkulationsleitung 16 dient einen Gasaustausch zwischen dem Kraftfahrzeugtank 10 und dem Einfüllstutzen 12 während eines Betankungsvorgangs des Kraftfahrzeugtanks 10 und ist lediglich optional und üblicherweise für den US-amerikanischen Markt vorgesehen.

Aus Figur 1 ist ersichtlich, dass das Kraftfahrzeugtanksystem eine Entlüftungsvorrichtung 21, 22 zum Entlüften eines Tankvolumens des Kraftfahrzeugtanks 10 aufweist. Bei dem dargestellten Ausführungsbeispiel umfasst die Entlüftungsvorrichtung ein Betriebsentlüftungsventil 21 und ein Betankungsentlüftungsventil 22. Dabei ist das Betriebsentlüftungsventil 21 über eine Betriebsentlüftungsleitung 30 mit einer Entlüftungsleitung 32 und das Betankungsentlüftungsventil 22 mittels einer Betankungsentlüftungsleitung 31 mit der Entlüftungsleitung 32 fluidverbunden.

Die Entlüftungsleitung 32 ist mit einem Absperrventil 24, das auch als FTIV 24 (aus dem englischen für fuel tank isolation valve) bezeichnet werden kann, und mit einem Regelventil 42, das auch als Drosselventil 42 bezeichnet werden kann, jeweils fluidverbunden. Das Drosselventil 42 wiederum ist mit einer Spülleitung 43 fluidverbunden, die in einem Ansaugtrakt 51 des Motors 50 mündet. Folglich ist der Kraftfahrzeugtank 10 über das Betriebsentlüftungsventil 21 und/oder das Betankungsentlüftungsventil 22, die Entlüftungsleitung 32 und das Regelventil 42 direkt und unmittelbar mit dem Ansaugtrakt 21 des Motors 50 fluidverbindbar. Für eine Fluidverbindung des Kraftfahrzeugtanks 10 mit dem Ansaugtrakt 51 muss entweder das Betriebsentlüftungsventil 21 und/oder das Betankungsentlüftungsventil 22 und das Drosselventil 42 geöffnet sein. Unter einer direkten und unmittelbaren Fluidverbindung zwischen dem Kraftfahrzeugtank 10 und dem Ansaugtrakt 51 ist eine Fluidverbindung zu verstehen, in der kein Aktivkohlefilter angeordnet ist.

Wie bereits oben erwähnt, ist die Entlüftungsleitung 32 auch mit dem Absperrventil 24 fluidverbunden. Das Absperrventil 24 wiederum ist mit einem Aktivkohlefilter 40 fluidverbunden, wobei das Aktivkohlefilter 40 zum Filtern von Gasen des Kraftfahrzeugtanks 10 ausgebildet ist. Die sich im Kraftfahrzeugtank 10 befindlichen Gase sind üblicherweise mit Kohlenwasserstoffen gesättigt, so dass bei einem Ableiten der Gase aus dem Kraftfahrzeugtank 10 über das Aktivkohlefilter 40 die Kohlenwasserstoffe von der Aktivkohle des Aktivkohlefilters 40 adsorbiert werden. Das Aktivkohlefilter 40 wiederum ist über ein Spülventil 41 / Auslassventil 41, das auch als Purge-Ventil 41 bezeichnet werden kann, mit der Spülleitung 43 und folglich mit dem Ansaugtrakt 51 des Motors 50 fluidverbunden.

Aus Figur 1 ist ferner ersichtlich, dass das Aktivkohlefilterfilter 40 ferner mit einem Diagnoseventil 44, das auch als OBD-Ventil 44 (aus dem englischen für on board diagnostic) bezeichnet werden kann, zur Prüfung des Aktivkohlefilters 40 und des gesamten Kraftfahrzeugtanksystems fluidverbunden ist.

Das in Figur 1 dargestellte Kraftfahrzeugtanksystem bietet folglich die Funktionalität, dass Gase aus dem Kraftfahrzeugtank 10, die üblicherweise mit Kohlenwasserstoffen gesättigt sind, durch Überbrückung des Aktivkohlefilters 40 direkt dem Ansaugtrakt 51 zugeführt werden können, wobei bei Verschluss des Regelventils 42 und Öffnung des Absperrventil 24 und des Auslassventils 41 die Gase auch über das Aktivkohlefilter 40 dem Ansaugtrakt 51 des Motors 50 zuführbar sind.

Das Kraftfahrzeugtanksystem umfasst weiterhin eine Tanksteuereinrichtung 60, die mittels einer ersten Datenaustauschverbindung 101 mit dem Betriebsentlüftungsventil 21 und/oder dem Betankungsentlüftungsventil 22 zum Austausch von Daten bzw. Signalen verbunden ist. Zu diesem Zweck weist die Tanksteuereinrichtung 60 eine Datenausgabeeinheit 63 / Signalausgabeeinheit 63 auf, die mit der ersten Datenaustauschverbindung 101, die auch als erste Datenleitung 101 bzw. erste Signalleitung 101 bezeichnet werden kann, verbunden ist. Somit ist/sind das Betriebsentlüftungsventil 21 und/oder das Betankungsentlüftungsventil 22 mittels der Tanksteuereinrichtung 60 jeweils zwischen einer Offenstellung und Schließstellung verstellbar. Damit das Betriebsentlüftungsventil 21 mittels der Tanksteuereinrichtung 60 zwischen einer Offenstellung und Schließstellung verstellbar ist, muss das Betriebsentlüftungsventil 21 elektrisch und/oder elektromagnetisch zwischen der Offenstellung und der Schließstellung verstellbar sein. Selbiges gilt für das Betankungsentlüftungsventil 22, dass zwischen der Offenstellung und Schließstellung elektrisch und/oder elektromagnetisch verstellbar ist.

Unter einer elektrischen und/oder elektromagnetischen Verstellung ist dabei eine elektromechanische Verstellung der jeweiligen Ventile zu verstehen.

Dabei ist in der Offenstellung des Betriebsentlüftungsventils 21 der Kraftfahrzeugtank 10 mit der Betriebsentlüftungsleitung 30 fluidverbunden, wobei in einer Schließstellung des Betriebsentlüftungsventils 21 der Kraftfahrzeugtank 10 von der Betriebsentlüftungsleitung 30 fluidgetrennt ist. Selbiges gilt für das Betankungsentlüftungsventil 22, dass mittels der Tanksteuereinrichtung 60 zwischen einer Offenstellung und Schließstellung verstellbar ist, wobei in der Offenstellung des Betankungsentlüftungsventils 22 der Kraftfahrzeugtank 10 mit der Betankungsentlüftungsleitung 31 fluidverbunden ist, und wobei in der Schließstellung des Betankungsentlüftungsventils 22 der Kraftfahrzeugtank 10 von der Betankungsentlüftungsleitung 31 fluidgetrennt ist.

Ferner ist aus Figur 1 ersichtlich, dass auch das Regelventil 42 über die erste Datenleitung 101 mit der Tanksteuereinrichtung 60 zum Austausch von Daten verbunden ist. Das Regelventil 42 ist dabei auch elektrisch und/oder elektromagnetisch zwischen einer Offenstellung und einer Schließstellung verstellbar, wobei in der Offenstellung des Regelventils 42 die Entlüftungsleitung 32 mittels des Regelventils 42 mit dem Ansaugtrakt 51 verbunden ist, und wobei in der Schließstellung des Regelventils 42 die Entlüftungsleitung 32 mittels des Regelventils 42 von dem Ansaugtrakt 51 fluidgetrennt ist. Das Regelventil 42 kann auch Zwischenstellungen zwischen der Offenstellung und Schließstellung einnehmen und es zwischen der Offenstellung und Schließstellung kontinuierlich in dessen Öffnung variiert werden. Somit kann der Druck des Gases aus dem Kraftfahrzeugtank 10 durch das Regelventil 42 reduziert werden, so dass das mit Kohlenwasserstoffen angereicherte Gas aus dem Kraftfahrzeugtank 10 mit einem verminderten Überdruck dem Ansaugtrakt 51 bereitgestellt werden kann.

Zum Ablassen von Überdruck aus dem Kraftfahrzeugtank 10 ist die Tanksteuereinrichtung 60 derart ausgebildet, dass diese über die Datenaustauschverbindung 101 an das Betriebsentlüftungsventil 21 und/oder das Betankungsentlüftungsventil 22 ein Entlüftungssignal überträgt, wobei bei Empfang des Entlüftungssignals das Betriebsentlüftungsventil 21 und/oder das Betankungsentlüftungsventil 22 jeweils in deren Offenstellung überführt werden. Ferner wird ein entsprechendes Entlüftungssignal auch an das Regelventil 42 gesendet, so dass das Regelventil 42 eine Fluidverbindung zwischen der Entlüftungsleitung 32 und der Spülleitung 43 ermöglicht. Gleichzeitig wird ein Schließsignal an das Absperrventil 24 gesendet, so dass das Gas nicht über das Aktivkohlefilter 40 sondern direkt von dem Kraftfahrzeugtank 10 unter Überbrückung des Aktivkohlefilters 40 dem Motor 50 bereitgestellt wird.

Andererseits ist die Tanksteuereinrichtung 60 auch dazu ausgebildet, an das Betriebsentlüftungsventil 21 und/oder das Betankungsentlüftungsventil 22 und/oder das Regelventil 42 ein Entlüftungsstoppsignal zu übertragen, so dass das Betriebsentlüftungsventil 21 und/oder das Betankungsentlüftungsventil 22 und/oder das Regelventil 42 in deren Schließstellung überführt werden. Gleichzeitig wird ein Öffnungssignal an das Absperrventil 24 und das Spülventil 41 übertragen, so dass das Gas aus dem Kraftfahrzeugtank 10 über das Aktivkohlefilter 40 an den Motor 50 abgeleitet werden kann, bzw. das Aktivkohlefilter 40 durch Ansaugluft des Motors 50 gespült wird.

Aus Figur 1 ist ferner ersichtlich, dass das Kraftfahrzeugtanksystem einen im Kraftfahrzeugtank 10 angeordneten Drucksensor 13 umfasst, der zum Bestimmen eines Innendrucks des Kraftfahrzeugtanks 10 ausgebildet ist. Der Drucksensor 13 ist mit der Tanksteuereinrichtung 60 über eine zweite Datenaustauschverbindung 102 in Form einer zweiten Datenleitung 102 verbunden und dazu ausgebildet, den Innendruck des Kraftfahrzeugtanks 10 repräsentierende Daten an die Tanksteuereinrichtung 60 zu übertragen. Die zweite Datenleitung 102 ist dabei mit einer zweiten Datenempfangseinheit 62 der Tanksteuereinrichtung 60 verbunden.

Ferner ist aus Figur 1 ersichtlich, dass die Tanksteuereinrichtung 60 eine Datenschnittstelle 61 in Form einer Datenempfangseinheit 61 zum Austausch von Daten mit einer Elektronikeinheit 70 umfasst. Die Elektronikeinheit 70 kann beispielsweise ein Bordcomputer 70 des Kraftfahrzeugs oder ein mobiles Endgerät, beispielsweise ein Smartphone 70 sein. Der Bordcomputer 70 bzw. das Smartphone 70 können eine Navigationseinheit aufweisen, in der eine zu fahrende Strecke des Kraftfahrzeugs in einem elektronischen Datenspeicher 71 abgelegt sind. Ferner können in dem elektronischen Datenspeicher 71 Positionsinformationen von sich in der Umgebung des Kraftfahrzeugs befindlichen Tankstellen gespeichert sein. Die Tanksteuereinrichtung 60 wiederum kann bei Empfang von Daten, die von der Elektronikeinheit 70 übertragen werden, geeignete Entlüftungssignale und/oder Entlüftungsstoppsignale an die Ventile 21, 22, 24, 42 und 41 übertragen.

Beispielsweise kann mittels der Elektronikeinheit 70 ein Tanksignal an die Tanksteuereinrichtung 60 gesendet werden, woraufhin in der Tanksteuereinrichtung 60 überprüft wird, ob ein Innendruck des Kraftfahrzeugtanks 10 einen vorbestimmten Wert übersteigt. Wenn der Innendruck des Kraftfahrzeugtanks 10 den vorbestimmten Wert übersteigt, werden das Betriebsentlüftungsventil 21 und/oder das Betankungsentlüftungsventil 22 durch Übertragung eines Entlüftungssignals geöffnet. In Abhängigkeit des Innendrucks des Kraftfahrzeugtanks 10 wird dann das Regelventil 42 so weit geöffnet, dass das aus dem Kraftfahrzeugtank 10 ausströmendes Gas mit einem geeigneten Überdruck dem Ansaugtrakt 51 des Motors 50 bereitgestellt wird. Die direkte Entlüftung des Kraftfahrzeugtanks 10 kann solange fortgeführt werden, bis der Innendruck des Kraftfahrzeugtanks 10 abgebaut ist oder bis der Motor 50 abgestellt wird. Die Tanksteuereinrichtung 60 überprüft, ob der Überdruck aus dem Kraftfahrzeugtank 10 abgebaut ist. Diese Überprüfung erfolgt mittels des Drucksensors 13. Wenn der Überdruck im Kraftfahrzeugtank 10 abgebaut ist, überträgt die Tanksteuereinrichtung 60 an das Regelventil 42 ein Schließsignal, woraufhin die direkte Fluidverbindung von dem Kraftfahrzeugtank 10 hin zum Ansaugtrakt 51 unterbunden wird. Gleichzeitig wird ein Öffnungssignal an das Absperrventil 24 und das Spülventil 41 ausgegeben, so dass diese in deren Offenstellung überführt werden. Somit wird das Aktivkohlefilter 40 durch Ansaugluft des Motors 50 gespült und der Beladungszustand des Aktivkohlefilters 40 kann reduziert werden. Die Spülung des Aktivkohlefilters wird in Abhängigkeit von dessen Fassungsvermögen über einen vorbestimmten Zeitraum durchgeführt. Die Spülung des Aktivkohlefilters 40 kann auch vorzeitig beendet werden, beispielsweise durch Deaktivieren des Motors 50. Zur Spülung des Aktivkohlefilters sollte das Diagnoseventil 44 geöffnet sein.

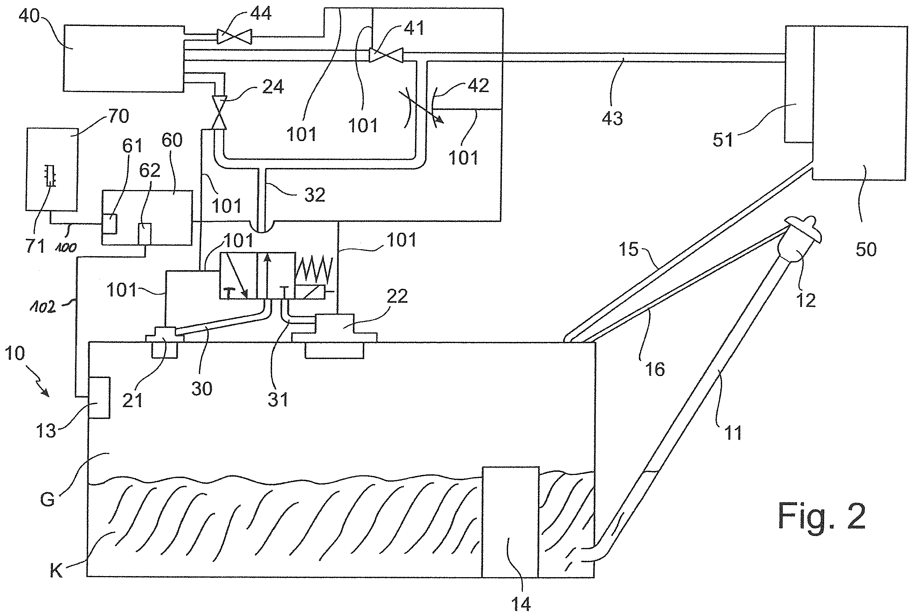

In Figur 2 ist eine Abwandlung des Kraftfahrzeugtanksystems der Figur 1 dargestellt. Das Kraftfahrzeugtanksystem gemäß der vorliegenden Erfindung umfasst ferner ein Schaltventil 23 in Form eines 3/2-Wegeventils 23, das mit dem Betriebsentlüftungsventil 21, dem Betankungsentlüftungsventil 22 und der Entlüftungsleitung 32 fluidverbunden ist. Das 3/2-Wegeventil 23 ist elektrisch und/oder elektromagnetisch zwischen einer Betriebsentlüftungsstellung und einer Betankungsentlüftungsstellung verstellbar, wobei in der Betriebsentlüftungsstellung das Betriebsentlüftungsventil 21 mittels des 3/2-Wegeventils 23 mit der Entlüftungsleitung 32 fluidverbunden ist, und wobei in der Betankungsentlüftungsstellung das Betankungsentlüftungsventil 22 mittels des 3/2-Wegeventils 23 mit der Entlüftungsleitung 32 fluidverbunden ist. In Figur 2 ist das 3/2-Wegeventil in dessen Betriebsentlüftungsstellung dargestellt.

Durch Bereitstellen des 3/2-Wegeventils ist es nicht unbedingt notwendig, dass das Betriebsentlüftungsventil 21 und/oder das Betankungsentlüftungsventil 22 elektrisch und/oder elektromagnetisch betätigbar sind. Jedoch können selbstverständlich das Betriebsentlüftungsventil 21 und auch das Betankungsentlüftungsventil 22 weiterhin elektromechanisch verstellbar sein.

Die übrige Funktionalität des Kraftfahrzeugtanksystems gemäß der zweiten Ausführungsform der vorliegenden Erfindung ist identisch mit der Funktionalität und dem Aufbau des Kraftfahrzeugtanksystems gemäß der ersten Ausführungsform, so dass auf die entsprechende Beschreibung der vorliegenden Anmeldung Bezug genommen wird.

### Bezugszeichenliste:

- 10: Kraftfahrzeugtank
- 11: Einfüllrohr (des Kraftfahrzeugtanks)
- 12: Einfüllstutzen
- 13: Drucksensor
- 14: Kraftstofffördereinrichtung / Kraftstoffpumpe
- 15: Kraftstoffleitung
- 16: Rezirkulationsleitung
- 21: Aktuator / Betriebsentlüftungsventil
- 22: Aktuator / Betankungsentlüftungsventil
- 23: Aktuator / 3/2-Wegeventil / Schaltventil
- 24: Aktuator / Absperrventil / FTIV
- 30: Betriebsentlüftungsleitung
- 31: Betankungsentlüftungsleitung
- 32: Entlüftungsleitung
- 40: Aktivkohlefilter
- 41: Spülventil / Auslassventil / Purge-Ventil
- 42: Regelventil / Drosselventil
- 43: Spülleitung
- 44: Diagnoseventil / OBD-Ventil
- 50: Brennkraftmaschine / Motor
- 51: Ansaugtrakt (der Brennkraftmaschine)
- 60: Tanksteuereinrichtung / Tanksteuerungseinrichtung (des Kraftfahrzeugtanks)
- 61: (erste) Datenempfangseinheit (der Tanksteuereinrichtung)
- 62: (zweite) Datenempfangseinheit (der Tanksteuereinrichtung)
- 63: Datenausgabeeinheit
- 70: Elektronikeinheit / Bordcomputer / mobiles Endgerät / Datenverarbeitungsanlage (zur Erzeugung und Bereitstellung einer Datenwolke)
- 71: elektronischer Datenspeicher (der Elektronikeinheit)
- 100: Datenleitung (zwischen Elektronikeinheit und Tanksteuereinrichtung)
- 101: (erste) Datenaustauschverbindung / Datenleitung / Signalleitung / elektrische Leitung
- 102: (zweite) Datenaustauschverbindung / Datenleitung / Signalleitung / elektrische Leitung
- G: Gasvolumen (im Kraftfahrzeugtank)
- K: Kraftstoff (im Kraftfahrzeugtank)

## Patentansprüche

1. Kraftfahrzeugtanksystem mit einem Kraftfahrzeugtank (10) und einer Entlüftungsvorrichtung (21, 22, 23) zum Entlüften eines Tankvolumens des Kraftfahrzeugtanks (10), wobei der Kraftfahrzeugtank (10) über die Entlüftungsvorrichtung (21, 22, 23), eine mit der Entlüftungsvorrichtung (21, 22, 23) fluidverbundene Entlüftungsleitung (32) und einem mit der Entlüftungsleitung (32) fluidverbundenen Regelventil (42) direkt und unmittelbar mit einem Ansaugtrakt (51) einer Brennkraftmaschine (50) fluidverbindbar ist, so dass in diesem Entlüftungspfad kein Aktivkohlefilter angeordnet ist, wobei das Kraftfahrzeugtanksystem folgende Merkmale aufweist:
- die Entlüftungsvorrichtung (21, 22, 23) umfasst ein Betriebsentlüftungsventil (21) zum Entlüften des Tankvolumens während eines Betriebs eines das Kraftfahrzeugtanksystem umfassenden Kraftfahrzeugs, wobei das Betriebsentlüftungsventil (21) mit dem Kraftfahrzeugtank (10) und mittels einer Betriebsentlüftungsleitung (30) mit der Entlüftungsleitung (32) fluidverbunden ist; und
- die Entlüftungsvorrichtung (21, 22, 23) umfasst ein Betankungsentlüftungsventil (22) zum Entlüften des Tankvolumens während eines Betankungsvorgangs des Kraftfahrzeugtanks (10), wobei das Betankungsentlüftungsventil (22) mit dem Kraftfahrzeugtank (10) und mittels einer Betankungsentlüftungsleitung (31) mit der Entlüftungsleitung (32) fluidverbunden ist,
wobei das Kraftfahrzeugtanksystem durch folgende Merkmale **gekennzeichnet** ist:
- das Kraftfahrzeugtanksystem umfasst ferner ein 3/2-Wegeventil (23), das mit dem Betriebsentlüftungsventil (21), dem Betankungsentlüftungsventil (22) und der Entlüftungsleitung (32) fluidverbunden ist;
- das 3/2-Wegeventil (23) ist elektrisch und/oder elektromagnetisch zwischen einer Betriebsentlüftungsstellung und einer Betankungsentlüftungsstellung verstellbar;
- in der Betriebsentlüftungsstellung ist das Betriebsentlüftungsventil (21) mittels des 3/2-Wegeventils (23) mit der Entlüftungsleitung (32) fluidverbunden; und
- in der Betankungsentlüftungsstellung ist das Betank ungsentlüftungsventil (22) mittels des 3/2-Wegeventils (23) mit der Entlüftungsleitung (32) fluidverbunden.

2. Kraftfahrzeugtanksystem nach Anspruch 1, **gekennzeichnet durch** die folgenden Merkmale:
- das Betriebsentlüftungsventil (21) ist elektrisch und/oder elektromagnetisch zwischen einer Offenstellung und einer Schließstellung verstellbar;
- in der Offenstellung des Betriebsentlüftungsventils (21) ist der Kraftfahrzeugtank (10) mit der Betriebsentlüftungsleitung (30) fluidverbunden; und
- in der Schließstellung des Betriebsentlüftungsventils (21) ist der Kraftfahrzeugtank (10) von der Betriebsentlüftungsleitung (30) fluidgetrennt.

3. Kraftfahrzeugtanksystem nach einem der Anspruch 1 bis 2, **gekennzeichnet durch** die folgenden Merkmale:
- das Betankungsentlüftungsventil (22) ist elektrisch und/oder elektromagnetisch zwischen einer Offenstellung und einer Schließstellung verstellbar;
- in der Offenstellung des Betankungsentlüftungsventils (22) ist der Kraftfahrzeugtank (10) mit der Betankungsentlüftungsleitung (31) fluidverbunden; und
- in der Schließstellung des Betankungsentlüftungsventils (22) ist der Kraftfahrzeugtank (10) von der Betankungsentlüftungsleitung (31) fluidgetrennt.

4. Kraftfahrzeugtanksystem nach einem der vorhergehenden Ansprüche, **gekennzeichnet durch** die folgenden Merkmale:
- das Regelventil (42) ist elektrisch und/oder elektromagnetisch kontinuierlich zwischen einer Offenstellung und einer Schließstellung verstellbar;
- in der Offenstellung des Regelventils (42) ist die Entlüftungsleitung (32) mittels des Regelventils (42) mit dem Ansaugtrakt (51) der Brennkraftmaschine (50) fluidverbunden;
- in der Schließstellung des Regelventils (42) ist die Entlüftungsleitung mittels des Regelventil (42) von dem Ansaugtrakt (51) der Brennkraftmaschine (50) fluidgetrennt.

5. Kraftfahrzeugtanksystem nach einem der vorhergehenden Ansprüche, **dadurch gekennzeichnet, dass** das Kraftfahrzeugtanksystem eine Tanksteuereinrichtung (60) umfasst, die mit der Entlüftungsvorrichtung (21, 22, 23) über eine Datenaustauschverbindung (101) verbunden ist.

6. Kraftfahrzeugtanksystem nach Anspruch 5, **gekennzeichnet durch** die folgenden Merkmale:
- die Tanksteuereinrichtung (60) ist über die Datenaustauschverbindung (101) mit dem Betriebsentlüftungsventil (21) verbunden;
- die Tanksteuereinrichtung (60) ist dazu ausgebildet, an das Betriebsentlüftungsventil (21) ein Entlüftungssignal zu übertragen, wobei bei Empfang des Entlüftungssignals das Betriebsentlüftungsventil (21) in dessen Offenstellung überführt wird; und
- die Tanksteuereinrichtung (60) ist dazu ausgebildet, an das Betriebsentlüftungsventil (21) ein Entlüftungsstoppsignal zu übertragen, wobei bei Empfang des Entlüftungsstoppsignals das Betriebsentlüftungsventil (21) in dessen Schließstellung überführt wird.

7. Kraftfahrzeugtanksystem nach einem der Ansprüche 5 oder 6, **gekennzeichnet durch** die folgenden Merkmale:
- die Tanksteuereinrichtung (60) ist über die Datenaustauschverbindung (101) mit dem Betankungsentlüftungsventil (22) verbunden;
- die Tanksteuereinrichtung (60) ist dazu ausgebildet, an das Betankungsentlüftungsventil (22) ein Entlüftungssignal zu übertragen, wobei bei Empfang des Entlüftungssignals das Betankungsentlüftungsventil (22) in dessen Offenstellung überführt wird; und
- die Tanksteuereinrichtung (60) ist dazu ausgebildet, an das Betankungsentlüftungsventil (22) ein Entlüftungsstoppsignal zu übertragen, wobei bei Empfang des Entlüftungsstoppsignals das Betankungsentlüftungsventil (22) in dessen Schließstellung überführt wird.

8. Kraftfahrzeugtanksystem nach einem der Ansprüche 5 bis 7, **gekennzeichnet durch** die folgenden Merkmale:
- das Kraftfahrzeugtanksystem umfasst ferner einen Drucksensor (13) zum Bestimmen eines Innendrucks des Kraftfahrzeugtanks (10);
- der Drucksensor (13) ist mit der Tanksteuereinrichtung (60) über eine zweite Datenaustauschverbindung (102) verbunden und dazu ausgebildet, den Innendruck des Kraftfahrzeugtanks (10) repräsentierende Daten an die Tanksteuereinrichtung (60) zu übertragen;
- die Tanksteuereinrichtung (60) ist dazu ausgebildet, ein Entlüftungssignal an das 3/2-Wegeventil (23) und/oder das Betriebsentlüftungsventil (21) und/oder das Betankungsentlüftungsventil (22) und/oder das Regelventil (42) zu übertragen, so dass eine Fluidverbindung zwischen dem Kraftfahrzeugtank (10) und dem Ansaugtrakt (51) der Brennkraftmaschine (50) etabliert wird, wenn der Innendruck im Kraftfahrzeugtank (10) einen vorbestimmten Druck übersteigt.

9. Kraftfahrzeugtanksystem nach einem der Ansprüche 5 bis 8, **dadurch gekennzeichnet, dass** die Tanksteuereinrichtung (60) eine Datenschnittstelle (61) zum Austausch von Daten mit einer Elektronikeinheit (70) umfasst, wobei eine Ausgabe des Entlüftungssignals und/oder des Entlüftungsstoppsignals durch Empfang von Daten initiierbar ist, die von der Elektronikeinheit (70) übertragenen werden.

10. Kraftfahrzeugtanksystem nach Anspruch 9, **dadurch gekennzeichnet, dass** die Tanksteuereinrichtung (60) lediglich dann ein Entlüftungssignal an das 3/2-Wegeventil (23) und/oder an das Betriebsentlüftungsventil (21) und/oder an das Betankungsentlüftungsventil (22) und/oder das Regelventil (42) überträgt, wenn die Tanksteuereinrichtung (60) von der Elektronikeinheit (70) ein Tanksignal empfängt.

11. Kraftfahrzeugtanksystem nach einem der vorhergehenden Ansprüche, **gekennzeichnet durch** die folgenden Merkmale:
- das Kraftfahrzeugtanksystem umfasst ein mit der Entlüftungsleitung (32) fluidverbundenes Absperrventil (24) und einen mit dem Absperrventil (24) fluidverbundenen Aktivkohlefilter (40) zum Filtern von aus dem Kraftfahrzeugtank (10) abzuleitenden Gasen;
- der Kraftfahrzeugtank (10) ist über das Betriebsentlüftungsventil (21) und/oder das Betankungsentlüftungsventil (22) und/oder das 3/2-Wegeventil (23) und das Absperrventil (24) mit dem Aktivkohlefilter (40) fluidverbindbar;
- das Aktivkohlefilter (40) ist über ein Auslassventil (41) mit dem Ansaugtrakt (51) der Brennkraftmaschine (50) fluidverbindbar;
- die Tanksteuereinrichtung (60) ist dazu ausgebildet, ein Öffnungssignal und/oder ein Schließsignal an das Absperrventil (24) zu übertragen;
- bei Empfang des Öffnungssignals öffnet das Absperrventil (24), so dass der Kraftfahrzeugtank (10) mit dem Aktivkohlefilter (40) fluidverbunden ist; und
- bei Empfang des Schließsignals schließt das Absperrventil (24), so dass der Kraftfahrzeugtank (10) von dem Aktivkohlefilter (40) fluidgetrennt ist.

12. Kraftfahrzeugtank (10) nach Anspruch 11, **gekennzeichnet durch** die folgenden Merkmale:
- die Tanksteuereinrichtung (60) ist dazu ausgebildet, zu einem ersten Zeitpunkt ein Entlüftungssignal an das 3/2-Wegeventil (23) und/oder das Betriebsentlüftungsventil (21) und/oder das Betankungsentlüftungsventil (22) zu übertragen, so dass eine Fluidverbindung zwischen dem Kraftfahrzeugtank (10) und dem Ansaugtrakt (51) der Brennkraftmaschine (50) etabliert wird;
- die Tanksteuereinrichtung ist dazu ausgebildet, zu einem zweiten Zeitpunkt, der den ersten Zeitpunkt nachfolgend ist, ein Öffnungssignal an das Absperrventil (24) zu übertragen, so dass eine Fluidverbindung zwischen dem Aktivkohlefilter (40) und dem Ansaugtrakt (51) der Brennkraftmaschine (50) etabliert wird.

## Claims

1. Motor vehicle tank system having a motor vehicle tank (10) and having a venting apparatus (21, 22, 23) for venting a tank volume of the motor vehicle tank (10), wherein the motor vehicle tank (10) is, via the venting apparatus (21, 22, 23), a venting line (32) which is fluidically connected to the venting apparatus (21, 22, 23), and a regulating valve (42) which is fluidically connected to the venting line (32), able to be fluidically connected directly to an intake tract (51) of an internal combustion engine (50) such that no activated carbon filter is arranged in this venting path, wherein the motor vehicle tank system has the following features:
- the venting apparatus (21, 22, 23) comprises an operational venting valve (21) for venting the tank volume during operation of a motor vehicle which comprises the motor vehicle tank system, wherein the operational venting valve (21) is fluidically connected to the motor vehicle tank (10) and, by means of an operational venting line (30), to the venting line (32); and
- the venting apparatus (21, 22, 23) comprises a refuelling venting valve (22) for venting the tank volume during a refuelling process of the motor vehicle tank (10), wherein the refuelling venting valve (22) is fluidically connected to the motor vehicle tank (10) and, by means of a refuelling venting line (31), to the venting line (32),
wherein the motor vehicle tank system is **characterized by** the following features:
- the motor vehicle tank system also comprises a 3/2-way valve (23), which is fluidically connected to the operational venting valve (21), the refuelling venting valve (22) and the venting line (32);
- the 3/2-way valve (23) is able to be adjusted electrically and/or electromagnetically between an operational venting position and a refuelling venting position;
- in the operational venting position, the operational venting valve (21) is fluidically connected to the venting line (32) by means of the 3/2-way valve (23); and
- in the refuelling venting position, the refuelling venting valve (22) is fluidically connected to the venting line (32) by means of the 3/2-way valve (23) .

2. Motor vehicle tank system according to Claim 1, **characterized by** the following features:
- the operational venting valve (21) is able to be adjusted electrically and/or electromagnetically between an open position and a closed position;
- in the open position of the operational venting valve (21), the motor vehicle tank (10) is fluidically connected to the operational venting line (30) ;
- in the closed position of the operational venting valve (21), the motor vehicle tank (10) is fluidically separated from the operational venting line (30).

3. Motor vehicle tank system according to either of Claims 1 and 2, **characterized by** the following features:
- the refuelling venting valve (22) is able to be adjusted electrically and/or electromagnetically between an open position and a closed position;
- in the open position of the refuelling venting valve (22), the motor vehicle tank (10) is fluidically connected to the refuelling venting line (31);
- in the closed position of the refuelling venting valve (22), the motor vehicle tank (10) is fluidically separated from the refuelling venting line (31).

4. Motor vehicle tank system according to one of the preceding claims, **characterized by** the following features:
- the regulating valve (42) is able to be adjusted electrically and/or electromagnetically in a continuous manner between an open position and a closed position;
- in the open position of the regulating valve (42), the venting line (32) is fluidically connected to the intake tract (51) of the internal combustion engine (50) by means of the regulating valve (42);
- in the closed position of the regulating valve (42), the venting line is fluidically separated from the intake tract (51) of the internal combustion engine (50) by means of the regulating valve (42).

5. Motor vehicle tank system according to one of the preceding claims, **characterized in that** the motor vehicle tank system comprises a tank control device (60), which is connected to the venting apparatus (21, 22, 23) via a data-exchanging connection (101).

6. Motor vehicle tank system according to Claim 5, **characterized by** the following features:
- the tank control device (60) is connected to the operational venting valve (21) via the data-exchanging connection (101);
- the tank control device (60) is designed to transmit a venting signal to the operational venting valve (21), wherein, when the venting signal is received, the operational venting valve (21) is transferred into its open position; and
- the tank control device (60) is designed to transmit a venting stop signal to the operational venting valve (21), wherein, when the venting stop signal is received, the operational venting valve (21) is transferred into its closed position.

7. Motor vehicle tank system according to either of Claims 5 and 6, **characterized by** the following features:
- the tank control device (60) is connected to the refuelling venting valve (22) via the data-exchanging connection (101);
- the tank control device (60) is designed to transmit a venting signal to the refuelling venting valve (22), wherein, when the venting signal is received, the refuelling venting valve (22) is transferred into its open position; and
- the tank control device (60) is designed to transmit a venting stop signal to the refuelling venting valve (22), wherein, when the venting stop signal is received, the refuelling venting valve (22) is transferred into its closed position.

8. Motor vehicle tank system according to one of Claims 5 to 7, **characterized by** the following features:
- the motor vehicle tank system also comprises a pressure sensor (13) for determining an internal pressure of the motor vehicle tank (10);
- the pressure sensor (13) is connected to the tank control device (60) via a second data-exchanging connection (102) and is designed to transmit data representing the internal pressure of the motor vehicle tank (10) to the tank control device (60);
- the tank control device (60) is designed to transmit a venting signal to the 3/2-way valve (23) and/or to the operational venting valve (21) and/or to the refuelling venting valve (22) and/or to the regulating valve (42), such that a fluidic connection is established between the motor vehicle tank (10) and the intake tract (51) of the internal combustion engine (50), when the internal pressure in the motor vehicle tank (10) exceeds a predetermined pressure.

9. Motor vehicle tank system according to one of Claims 5 to 8, **characterized in that** the tank control device (60) comprises a data interface (61) for exchanging data with an electronic unit (70), wherein an output of the venting signal and/or the venting stop signal is able to be initiated by receiving of data which are transmitted by the electronic unit (70).

10. Motor vehicle tank system according to Claim 9, **characterized in that** the tank control device (60) transmits a venting signal to the 3/2-way valve (23) and/or to the operational venting valve (21) and/or to the refuelling venting valve (22) and/or to the regulating valve (42) only when the tank control device (60) receives a tank signal from the electronic unit (70) .

11. Motor vehicle tank system according to one of the preceding claims, **characterized by** the following features:
- the motor vehicle tank system comprises a shut-off valve (24), which is fluidically connected to the venting line (32), and an activated carbon filter (40), which is fluidically connected to the shut-off valve (24) and which serves for filtering gases to be discharged from the motor vehicle tank (10);
- the motor vehicle tank (10) is able to be fluidically connected to the activated carbon filter (40) via the operational venting valve (21) and/or the refuelling venting valve (22) and/or the 3/2-way valve (23) and the shut-off valve (24);
- the activated carbon filter (40) is able to be connected to the intake tract (51) of the internal combustion engine (50) via an outlet valve (41);
- the tank control device (60) is designed to transmit an opening signal and/or a closing signal to the shut-off valve (24);
- when the opening signal is received, the shut-off valve (24) opens, with the result that the motor vehicle tank (10) is fluidically connected to the activated carbon filter (40); and
- when the closing signal is received, the shut-off valve (24) closes, with the result that the motor vehicle tank (10) is fluidically separated from the activated carbon filter (40).

12. Motor vehicle tank (10) according to Claim 11, **characterized by** the following features:
- the tank control device (60) is designed to transmit a venting signal to the 3/2-way valve (23) and/or to the operational venting valve (21) and/or to the refuelling venting valve (22) at a first time, such that a fluidic connection is established between the motor vehicle tank (10) and the intake tract (51) of the internal combustion engine (50);
- the tank control device is designed to transmit an opening signal to the shut-off valve (24) at a second time, which follows the first time, such that a fluidic connection is established between the activated carbon filter (40) and the intake tract (51) of the internal combustion engine (50).

## Revendications

1. Système de réservoir de véhicule automobile comprenant un réservoir de véhicule automobile (10) et un dispositif de dégazage (21, 22, 23) servant au dégazage d'un volume du réservoir de véhicule automobile (10), dans lequel le réservoir de véhicule automobile (10) peut être en liaison fluidique directement ou indirectement avec un système d'admission (51) d'un moteur à combustion interne (50) par le biais du dispositif de dégazage (21, 22, 23), d'une conduite de dégazage (32) en liaison fluidique avec le dispositif de dégazage (21, 22, 23) et d'une soupape de régulation (42) en liaison fluidique avec la conduite de dégazage (32), de telle sorte qu'aucun filtre à charbon actif ne soit disposé dans ce trajet de dégazage, dans lequel le système de réservoir de véhicule automobile présente les caractéristiques suivantes :
- le dispositif de dégazage (21, 22, 23) comporte une soupape de dégazage de fonctionnement (21) servant au dégazage du volume de réservoir pendant un fonctionnement d'un véhicule automobile comportant le système de réservoir de véhicule automobile, dans lequel la soupape de dégazage de fonctionnement (21) est en liaison fluidique avec le réservoir de véhicule automobile (10) et, au moyen d'une conduite de dégazage de fonctionnement (30), avec la conduite de dégazage (32) ; et
- le dispositif de dégazage (21, 22, 23) comporte une soupape de dégazage de remplissage (22) servant au dégazage du volume de réservoir pendant une opération de remplissage du réservoir de véhicule automobile (10), dans lequel la soupape de dégazage de remplissage (22) est en liaison fluidique avec le réservoir de véhicule automobile (10), et, au moyen d'une conduite de dégazage de remplissage (31), avec la conduite de dégazage (32),
dans lequel le système de réservoir de véhicule automobile est **caractérisé par** les caractéristiques suivantes :
- le système de réservoir de véhicule automobile comporte en outre une soupape à 3/2 voies (23) qui est en liaison fluidique avec la soupape de dégazage de fonctionnement (21), la soupape de dégazage de remplissage (22) et la conduite de dégazage (32) ;
- la soupape à 3/2 voies (23) est déplaçable de manière électrique et/ou électromagnétique entre une position de dégazage de fonctionnement et une position de dégazage de remplissage ;
- dans la position de dégazage de fonctionnement, la soupape de dégazage de fonctionnement (21) est en liaison fluidique avec la conduite de dégazage (32) au moyen de la soupape à 3/2 voies (23) ; et
- dans la position de dégazage de remplissage, la soupape de dégazage de remplissage (22) est en liaison fluidique avec la conduite de dégazage (32) au moyen de la soupape à 3/2 voies (23).

2. Système de réservoir de véhicule automobile selon la revendication 1, **caractérisé par** les caractéristiques suivantes :
- la soupape de dégazage de fonctionnement (21) est déplaçable de manière électrique et/ou électromagnétique entre une position ouverte et une position fermée ;
- dans la position ouverte de la soupape de dégazage de fonctionnement (21), le réservoir de véhicule automobile (10) est en liaison fluidique avec la conduite de dégazage de fonctionnement (30) ; et
- dans la position fermée de la soupape de dégazage de fonctionnement (21), le réservoir de véhicule automobile (10) est séparé fluidiquement de la conduite de dégazage de fonctionnement (30).

3. Système de réservoir de véhicule automobile selon la revendication 1 ou 2, **caractérisé par** les caractéristiques suivantes :
- la soupape de dégazage de remplissage (22) est déplaçable de manière électrique et/ou électromagnétique entre une position ouverte et une position fermée ;
- dans la position ouverte de la soupape de dégazage de remplissage (22), le réservoir de véhicule automobile (10) est en liaison fluidique avec la conduite de dégazage de remplissage (31) ; et
- dans la position fermée de la soupape de dégazage de remplissage (22), le réservoir de véhicule automobile (10) est séparé fluidiquement de la conduite de dégazage de remplissage (31).

4. Système de réservoir de véhicule automobile selon l'une des revendications précédentes, **caractérisé par** les caractéristiques suivantes :
- la soupape de régulation (42) est déplaçable de manière électrique et/ou électromagnétique en continu entre une position ouverte et une position fermée ;
- dans la position ouverte de la soupape de régulation (42), la conduite de dégazage (32) est en liaison fluidique avec le système d'admission (51) du moteur à combustion interne (50) au moyen de la soupape de régulation (42) ;
- dans la position fermée de la soupape de régulation (42), la conduite de dégazage est séparée fluidiquement du système d'admission (51) du moteur à combustion interne (50) au moyen de la soupape de régulation (42).

5. Système de réservoir de véhicule automobile selon l'une des revendications précédentes, **caractérisé en ce que** le système de réservoir de véhicule automobile comporte un dispositif de commande de réservoir (60) qui est relié au dispositif de dégazage (21, 22, 23) par le biais d'une liaison d'échange de données (101).

6. Système de réservoir de véhicule automobile selon la revendication 5, **caractérisé par** les caractéristiques suivantes :
- le dispositif de commande de réservoir (60) est relié à la soupape de dégazage de fonctionnement (21) par le biais de la liaison d'échange de données (101) ;
- le dispositif de commande de réservoir (60) est conçu pour transmettre un signal de dégazage à la soupape de dégazage de fonctionnement (21), la soupape de dégazage de fonctionnement (21) étant transférée à sa position ouverte lors de la réception du signal de dégazage ; et
- le dispositif de commande de réservoir (60) est conçu pour transmettre un signal d'arrêt de dégazage à la soupape de dégazage de fonctionnement (21), la soupape de dégazage de fonctionnement (21) étant transférée à sa position fermée lors de la réception du signal d'arrêt de dégazage.

7. Système de réservoir de véhicule automobile selon la revendication 5 ou 6, **caractérisé par** les caractéristiques suivantes :
- le dispositif de commande de réservoir (60) est relié à la soupape de dégazage de remplissage (22) par le biais de la liaison d'échange de données (101) ;
- le dispositif de commande de réservoir (60) est conçu pour transmettre un signal de dégazage à la soupape de dégazage de remplissage (22), la soupape de dégazage de remplissage (22) étant transférée à sa position ouverte lors de la réception du signal de dégazage ; et
- le dispositif de commande de réservoir (60) est conçu pour transmettre un signal d'arrêt de dégazage à la soupape de dégazage de remplissage (22), la soupape de dégazage de remplissage (22) étant transférée à sa position fermée lors de la réception du signal d'arrêt de dégazage.

8. Système de réservoir de véhicule automobile selon l'une des revendications 5 à 7, **caractérisé par** les caractéristiques suivantes :
- le système de réservoir de véhicule automobile comporte en outre un capteur de pression (13) servant à déterminer une pression interne du réservoir de véhicule automobile (10) ;
- le capteur de pression (13) est relié au dispositif de commande de réservoir (60) par le biais d'une deuxième liaison d'échange de données (102) et est conçu pour transmettre des données représentant la pression interne du réservoir de véhicule automobile (10) au dispositif de commande de réservoir (60) ;
- le dispositif de commande de réservoir (60) est conçu pour transmettre un signal de dégazage à la soupape à 3/2 voies (23) et/ou à la soupape de dégazage de fonctionnement (21) et/ou à la soupape dégazage de remplissage (22) et/ou à la soupape de régulation (42), de telle sorte qu'une liaison fluidique entre le réservoir de véhicule automobile (10) et le système d'admission (51) du moteur à combustion interne (50) soit établie lorsque la pression interne dans le réservoir de véhicule automobile (10) dépasse une pression prédéfinie.

9. Système de réservoir de véhicule automobile selon l'une des revendications 5 à 8, **caractérisé en ce que** le dispositif de commande réservoir (60) comporte une interface de données (61) pour l'échange de données avec une unité électronique (70), une émission du signal de dégazage et/ou du signal d'arrêt de dégazage pouvant être déclenchée par la réception de données qui ont été transmises par l'unité électronique (70).

10. Système de réservoir de véhicule automobile selon la revendication 9, **caractérisé en ce que** le dispositif de commande de réservoir (60) ne transmet un signal de dégazage à la soupape à 3/2 voies (23) et/ou à la soupape de dégazage de fonctionnement (21) et/ou à la soupape dégazage de remplissage (22) et/ou à la soupape de régulation (42) que lorsque le dispositif de commande de réservoir (60) reçoit un signal de réservoir en provenance de l'unité électronique (70).

11. Système de réservoir de véhicule automobile selon l'une des revendications précédentes, **caractérisé par** les caractéristiques suivantes :
- le système de réservoir de véhicule automobile comporte une soupape d'arrêt (24) en liaison fluidique avec la conduite de dégazage (32) et un filtre à charbon actif (40) en liaison fluidique avec la soupape d'arrêt (24) pour filtrer les gaz à évacuer du réservoir de véhicule automobile (10) ;
- le réservoir de véhicule automobile (10) peut être en liaison fluidique avec le filtre à charbon actif (40) par le biais de la soupape de dégazage de fonctionnement (21) et/ou de la soupape de dégazage de remplissage (22) et/ou de la soupape à 3/2 voies (23) et de la soupape d'arrêt (24) ;
- le filtre à charbon actif (40) peut être en liaison fluidique avec le système d'admission (51) du moteur à combustion interne (50) par le biais d'une soupape de sortie (41) ;
- le dispositif de commande de réservoir (60) est conçu pour transmettre un signal d'ouverture et/ou un signal de fermeture à la soupape d'arrêt (24) ;
- la soupape d'arrêt (24) s'ouvre lors de la réception du signal d'ouverture de telle sorte que le réservoir de véhicule automobile (10) soit en liaison fluidique avec le filtre à charbon actif (40) ; et
- la soupape d'arrêt (24) se ferme lors de la réception du signal de fermeture de telle sorte que le réservoir de véhicule automobile (10) soit séparé fluidiquement du filtre à charbon actif (40).

12. Réservoir de véhicule automobile (10) selon la revendication 11, **caractérisé par** les caractéristiques suivantes :
- le dispositif de commande réservoir (60) est conçu pour transmettre un signal de dégazage à la soupape à 3/2 voies (23) et/ou à la soupape de dégazage de fonctionnement (21) et/ou à la soupape de dégazage de remplissage (22) à un premier instant de telle sorte qu'une liaison fluidique entre le réservoir de véhicule automobile (10) et le système d'admission (51) du moteur à combustion interne (50) soit établie ;
- le dispositif de commande réservoir est conçu pour transmettre un signal d'ouverture à la soupape d'arrêt (24) à un deuxième instant subséquent au premier instant de telle sorte qu'une liaison fluidique entre le filtre à charbon actif (40) et le système d'admission (51) du moteur à combustion interne (50) soit établie.
